Europäisches Patentamt

European Patent Office

Office européen des brevets

(11) Numéro de publication: **0 299 961 B1**

(12) **FASCICULE DE BREVET EUROPEEN**

(45) Date de publication de fascicule du brevet: **02.12.92** (51) Int. Cl.⁵: **A01N 25/04**, A01N 47/22

(21) Numéro de dépôt: **87902110.3**

(22) Date de dépôt: **30.03.87**

(86) Numéro de dépôt internationale :
**PCT/FR87/00098**

(87) Numéro de publication internationale :
**WO 87/05778 (08.10.87 87/22)**

(54) **COMPOSITIONS HERBICIDES A BASE DE BISCARBAMATE ET PROCEDE DE TRAITEMENT HERBICIDE LES UTILISANT.**

(30) Priorité: **02.04.86 FR 8604904**

(43) Date de publication de la demande:
**25.01.89 Bulletin 89/04**

(45) Mention de la délivrance du brevet:
**02.12.92 Bulletin 92/49**

(84) Etats contractants désignés:
**BE DE FR GB IT NL**

(56) Documents cités:
EP-A- 142 670      EP-A- 242 888
EP-A- 0 088 049      EP-A- 0 102 003
FR-A- 2 530 122      GB-A- 2 123 294

**CHEMICAL ABSTRACTS, vol. 78, no. 9, 05 March 1973, Columbus, OH (US); S.D.MILLER et al., p. 157, no. 53965k&NUM;**

(73) Titulaire: **RHONE-POULENC AGROCHIMIE
14-20, rue Pierre Baizet
F-69009 Lyon(FR)**

(72) Inventeur: **DARCHY, François
14bis, rue de Tourvielle
F-69005 Lyon(FR)**

(74) Mandataire: **Brachotte, Charles et al
RHONE-POULENC AGROCHIMIE 14-20, Rue
Pierre Baizet B.P. 9163
F-69263 Lyon Cedex 09(FR)**

EP 0 299 961 B1

**Description**

La présente invention a pour objet des compositions herbicides liquides à base de méta-biscarbamates comme matière active. Elle concerne plus particulièrement des compositions sous la forme d'une dispersion de la matière active dans une émulsion organo-aqueuse.

Par m-bis-carbamates, on entend les herbicides répondant à la formule (I)

$$X - C_6H_4(m)- NH - CO - O - C_6H_4(m)- NH - CO - O - R \quad (I)$$

dans laquelle
- (m) indique que le radical aromatique est un radical méta-di-yle
- X représente l'atome d'hydrogène ou un radical alkyle comportant de 1 à 3 atomes de carbone
- R représente un radical alkyle comportant de 1 à 3 atomes de carbone.

Des exemples représentatifs d'herbicides de cette famille sont le phenmedipham (produit de formule (I) dans lequel $X = R = CH_3$) et le desmedipham (produit de formule (I) dans lequel X est l'atome d'hydrogène et R est le radical éthyle). Ces produits sont notamment utiles pour le désherbage des cultures de betteraves en postémergence.

Ces composés, et spécialement le phenmedipham, sont généralement utilisés sous forme de concentrés émulsionnables comprenant d'une part, un solvant organique et d'autre part, un agent tensio-actif. Ces adjuvants sont considérés comme nécessaires, car sans eux le phenmedipham a tendance à cristalliser lors de l'application ce qui l'empêche de pénétrer dans les plantes et d'exercer son action herbicide.

On a bien mentionné plus ou moins vaguement, la possibilité de réaliser des émulsions aqueuses de phenmedipham (brevet français 1536108 ; brevet russe 671798 ; demande de brevet européen n° 102003) mais on ne disposait pas jusqu'à présent de compositions aqueuses stables et présentant une bonne activité biologique.

Un but de la présente invention est de fournir des compositions concentrés aqueuses de bis-carbamates et notamment de phenmedipham. Les compositions concentrées aqueuses ont intrinsèquement divers avantages notamment en ce qu'elles sont généralement moins coûteuses et plus favorables à la sécurité.

Un autre but de la présente invention est de fournir des compositions concentrées aqueuses de phenmedipham conduisant, lors de leur dilution à l'eau, à des bouillies ayant une bonne activité biologique, c'est à dire manifestant un bon effet herbicide, du même ordre de grandeur que celui des bouillies issues des concentrés élulsionnables connus.

Un autre but de la présente invention est de fournir des compositions concentrées aqueuses de phenmedipham qui ne conduisent pas, lors de leur dilution à l'eau, à la formation de cristaux de phenmedipham de taille supérieure à 40 $\mu$m. En effet, une telle cristallisation, est nuisible par le fait que les microcristaux de taille plus élevée que 40 $\mu$m tendent à boucher les buses des appareils de pulvérisation.

Un autre but de la présente invention est de fournir des compositions concentrées aqueuses ayant une bonne stabilité physico-chimique au cours du temps.

Il a maintenant été trouvé que ces buts pouvaient être atteints grâce aux compositions selon l'invention.

Ces compositions sont caractérisées en ce qu'elles sont liquides et qu'elles comprennent (les pourcentages indiqués sont des pourcentages pondéraux):
- 10 à 50 % de biscarbamate de formule (I), de préférence de phenmedipham,
- 20 à 60 % d'huile végétale, c'est à dire d'huile telle que celles contenues dans les semences oléagineuses,
- 5 à 40 % d'agent(s) tensioactif(s), ayant des propriétés émulsifiantes et dispersantes,
- 20 à 60 % d'eau.

Les compositions selon l'invention ont en pratique un caractère mixte d'émulsion liquide/liquide et de dispersion solide/liquide.

Comme exemples d'huiles végétales utilisables, on peut citer les huiles de lin, de tournesol, de préférence de colza et de soja. On les obtient généralement par extraction et/ou pression et/ou écrasement des graines de semences oléagineuse

Comme il a été indiqué plus haut, l'agent tensioactif mis en oeuvre dans l'invention a des propriétés émulsifiantes et dispersantes. D'une manière pratique on préfère mettre en oeuvre un mélange de deux agents tensioactifs l'un à propriétés dispersantes, l'autre à propriétés émulsifiantes (ou émulsionnantes). Par tensioactif à propriétés émulsifiantes, on entend un composé tel que, si l'on agite violemment avec un agitateur rotatif un mélange équivolumique d'eau et d'huile végétale et de 10 % en poids du composé considéré, ce mélange ne se résépare pas en deux phases liquides distinctes après séjour au repos

2

pendant 1 h. Par tensioactif à propriétés dispersantes on entend un composé tel que, si l'on agite violemment avec un agitateur rotatif un mélange de 100 g de phenmedipham avec l litre d'eau et 50 g de dispersant, le mélange ne reprécipite pas après séjour au repos pendant 1 h.

Selon une autre variante de l'invention, comme agents tensioactifs à propriétés dispersantes et émulsifiantes, on utilise un mélange d'au moins un tensioactif ionique avec au moins un tensioactif non ionique.

Lorsqu'on utilise un agent tensioactif constitué d'un mélange, soit un mélange d'un tensioactif à propriétés émulsifiantes avec un tensioactif à propriétés dispersantes, soit un mélange d'un tensioactif ionique avec un tensioactif non ionique, la proportion relative en poids des 2 sortes de constituants du mélange est comprise habituellement entre 1/9 et 9/1, de préférence entre 1/3 et 3/1. Comme agents tensioactifs à propriétés dispersantes et comme agents tensioactifs à caractère ionique on peut citer les sels d'acides polyacryliques, les sels d'acides lignosulfoniques, les sels d'acides phénol sulfoniques ou naphtalène sulfoniques, les acides gras polyéthoxylés et leur sels, les amines grasses polyéthoxylées et salifiées, les alkylbenzène sulfonates et alkylnaphtalène sulfonates, les sels d'esters d'acides sulfosucciniques, les dérivés de la taurine (notamment les alkyltaurates), les mono- ou diesters phosphoriques d'alcool ou de phénol polyéthoxylés (notamment de di ou tri phényléthyl phénol polyéthoxylés). Dans la plupart de ces produits les chaînes alkyle ont de 6 à 20 atomes de carbone et les chaînes polyéthoxylées ont généralement de 6 à 30 groupes éthoxy.

Comme agents tensioactifs à propriétés émulsifiantes ou comme agents tensioactifs non ioniques, on peut citer les alkylphénols ou polyalkylphénols ou polyarylalkylphénols polyéthoxylés (notamment les dérivés à groupe alkyle ayant de 8 à 12 atomes de carbone), les alcools (notamment $C_6$ à $C_{20}$) aliphatiques polyéthoxylés, les esters d'acides gras (notamment $C_6$ à $C_{20}$) polyéthoxylés, les esters polyéthoxylés d'anhydrosorbitol (= sorbitan), les polyoxypropylèneglycols, les polyoxypropylèneglycols polyéthoxylés, les copolymères d'oxyde d'alkylène et les esters de ces polyéthers. Dans la plupart de ces produits les chaînes polyéthoxylées ou polyoxyalkylènes comportent généralement de 2 à 30 groupes éthoxy ou oxyalkylène.

Les agents tensioactifs à propriétés émulsifiantes et à caractère non ionique, peuvent éventuellement être renforcés quant à leur activité émulsifiante par un agent tensioactif de type ionique tel que les alkyl ($C_8$ -$C_{12}$) benzènesulfonates alcalins ou esters phosphoriques de polyéthers.

Outre les constituants précités les compositions selon l'invention peuvent contenir de 0,01 à 5 %, de préférence 0,05 à 1 % de biopolymère hydrophile de type hétéropolysaccharidique à caractère épaississant.

Les biopolymères hydrophiles de type hétéropolysaccharidiques utilisables dans l'invention sont des produits connus. Ils ont un poids moléculaire supérieur à 200 000 et de préférence supérieur à 1 000 000 ; ils ont des propriétés de pseudoplasticité et sont généralement obtenus par action (c'est à dire par fermentation) de bactéries du genre Xanthomonas sur des hydrates de carbone. Ces biopolymères sont aussi quelquefois désignés par d'autres expressions assez diverses telles que : colloïdes hydrophiles de Xanthomonas ; gommes hétéropolysaccharidiques; gommes xanthanes; hétéropolysaccharides extracellulaires provenant de Xanthomonas ou de bactéries de la famille des pseudomonacées. Le mot biopolymère est utilisé dans le sens qu'il s'agit de polymères issus d'un procédé biologique (fermentation bactérienne en l'occurence).

Les bactéries utilisées pour la préparation de ces biopolymères sont le plus souvent Xanthomonos campestris mais on peut aussi utiliser d'autres Xanthomonas telles que Xanthomonas carotae, Xanthomonas incanae, Xanthomonas begoniae, Xanthomonas malvacearum, Xanthomonas vesicatoria, Xanthomonas translucens, Xanthomonas vasculorum. Des hydrates de carbones appropriés pour la fermentetion à l'aide de bactéries Xanthomonas sont le glucose, le sucrose, le fructose, le maltose, le lactose, le galactose, l'amidon et le fécule de pomme de terre.

Comme il est habituel dans le domaine de la réalisation des compositions phytosanitaires, on peut incorporer aux compositions selon l'invention toute sorte d'additifs connus, et notamment des antigels et/ou des antimousses; ces produits facilitent la réalisation pratique et l'utilisation des compositions selon l'invention sans toutefois être indispensables à l'invention.

La préparation des compositions selon l'invention peut être effectuée par tout moyen connu en soit pour mélanger divers constituants liquides et solides.

La manipulation des compositions selon l'invention ne donne naissance à aucune poussière; ces compositions ne présentent aucun risque d'inflammabilité et évitent de faire appel à des solvants organiques.

La présente invention concerne également un procédé de traitement herbicide, notamment des cultures de betteraves et spécialement de cultures de betteraves à sucre, qui consiste à traiter en post émergence

3

un champ planté d'une culture de betteraves avec une quantité efficace d'une composition selon l'invention diluée à l'eau de manière à constituer une bouillie. Selon ce procédé de traitement la bouillie mise en oeuvre contient généralement 1 à 10 g de matière active par litre de bouillie appliquée (diluée à l'eau), de préférence 1,1 à 6 g/l. Selon ce même procédé de traitement herbicide selon l'invention, on applique généralement 150 à 2000 g/ha de matière active de formule (I) de préférence 250 à 1000 g/ha.

Les exemples suivants donnés à titre non limitatif illustrent l'invention et montrent comment elle peut être mise en oeuvre.

Exemples :

On prépare 6 compositions de 1 litre de volume et contenant 100 g de phenmedipham chacune. On réalise le mélange à l'aide d'un mélangeur broyeur. Le phenmedipham mis en oeuvre avait, avant mélange, une taille de cristaux comprise entre 1 et 30 $\mu$m.

Les autres constituants de chacune de ces compositions sont les suivants :

Composition n° 1 :

- 500 g d'huile de colza
- 25 g de phosphate (mono- et/ou diester) de tris(phényléthyl)phénol polyéthoxylé (18 motifs)
- 13 g d'un mélange de tributylphénol polyéthoxylé (8 motifs éthoxy ; 5 g) et d'alcool ($C_{11}$ à $C_{13}$) ramifié polyéthoxylé (10 motifs éthoxy ; 8 g)
- 2 g de biopolymère hétéropolysaccharidique
- 50 g de propylène glycol (antigel)
- 3 g d'huile polysiloxanique (antimousse)
- 307 g d'eau

Composition n° 2 à 4 :

Dans la composition n° 1, on remplace successivement l'huile de colza par une même quantité d'huile de soja (n° 2), de lin (n° 3), de tournesol (n° 4)

Composition n° 5 :

- 300 g d'huile de colza
- 100 g d'alcool ($C_{11}$-$C_{13}$) linéaire polyéthoxylé (10 motifs éthoxy)
- 93 g de l'ensemble du mélange d'adjuvants (autres que l'huile et l'eau) utilisé dans la composition n° 1.

A titre comparatif, on a également mise en oeuvre une composition n° 6; il s'agit d'une composition commercialisée sous le nom de bétanal et qui est un concentré émulsionnable à base d'isophorone comme solvant.

Ces diverses compositions, parfaitement stables pendant 6 mois au minimum, ont été testées du point de vue des propriétés physiques et phytosanitaires.

Propriétés physiques : contrôle de cristallisation après dilution à l'eau:

On réalise un test pour apprécier l'aptitude des compositions à la formation de cristaux par dilution dans l'eau, étant entendu que la formation de cristaux de taille supérieure à 40 $\mu$m est considérée comme nuisible.

Dans 980 ml d'eau, on ajoute en 40 secondes et sous agitation (pour homogénéiser), 20 ml de composition à tester. On amorce la formation d'un précipité par addition de 300 mg de phenmedipham solide. Au bout de 24 h, on filtre avec un tamis ayant une taille de mailles de 40 microns. On lave le précipité pendant 1 minute à l'aide d'un jet d'eau. Le précipité est récupéré, séché, puis pesé.

Le test tel que décrit ci-dessus est utilisé pour le contrôle de bouillies obtenues par dilution à l'eau des compositions n° 1 à 6. On a effectué les tests sur des bouillies obtenues en diluant ces compositions d'une part jusqu'à obtenir une bouillie contenant 2,5 g/l de phenmedipham et d'autre part jusqu'à obtenir une bouillie contenant 1,5 g/l de phenmedipham. De telles dilutions sont approximativement de l'ordre de grandeur des dilutions des bouillies que les agriculteurs appliquent sur les cultures dans les traitements herbicides ; tandis que les compositions concentrées sont celles stockées et manipulées avant dilution pour

4

EP 0 299 961 B1

obtenir une bouillie.

Aucune des compositions n°1 à 5 n'a causé l'apparition de microcristaux de taille supérieure à 40 microns.

La composition n°6, a, par contre, conduit à l'apparition de microcristaux de taille supérieure à 40 microns. A la dilution de 2,5 g/l, 27 % en poids du phenmedipham de la composition concentrée initiale se retrouvait sous forme de microcristaux de taille supérieure à 40 $\mu$m; à la dilution de 1,5 g/l ce pourcentage s'élevait à 84 % .

Propriétés herbicides :

Dans le but de vérifier que les compositions de l'invention avaient des propriétés herbicides convenables on a mesuré la DL90 (dose léthale d'application en g/ha à laquelle 90 % des plantes de l'espèce considérée sont détruites). Cette mesure a été effectuée par application de bouillies de différentes concentrations obtenues par dilution à l'eau des compositions concentrées n°1 à 6. Les résultats suivants ont été obtenus

| Composition n° | setaire | moutarde | renouée liseron |
|----------------|---------|----------|-----------------|
| Comp. n°1 | 700 | 350 | 300 |
| Comp. n°2 | 300 | 320 | 300 |
| Comp. n°3 | 1200 | 600 | 400 |
| Comp. n°4 | 1200 | 650 | 400 |
| Comp. n°5 | 330 | 350 | 300 |
| Comp. n°6 | 600 | 300 | 250 |

A partir des résultats qui précèdent, an observe que les compositions selon l'invention ont un effet herbicide du même ordre de grandeur que le concentré émulsionnable connu et commercialisé mais ont un avantage impartant au niveau de la propension à ne pas générer des micracristaux trop gros.

A titre comparatif an a également testé une composition n° 7 semblable à la composition n° 1 mais dans laquelle an a remplacé 500 g d'huile végétale par 400 g d'eau. Les propriétés physiques de la composition n° 7 étaient semblables aux propriétés physiques de la composition n° 1 ; par contre, sur le plan des propriétés herbicides, la composition n° 7 présentait une DL 90 supérieure à 2 000 vis à vis des trois mauvaises herbes citées plus haut ce qui est la preuve d'une activité herbicide très inférieure.

**Revendications**

**1.** Compositions herbicides liquides à base de biscarbamate caractérisées en ce qu'elles sont sous la forme d'une dispersion de la matière active dans une émulsion organo-aqueuse et en ce que le biscarbamate a pour formule (I)

$$X - C_6 H_4 (m)- NH - CO - O - C_6 H_4 (m)- NH - CO - O - R$$

dans laquelle
- (m) indique que le radical aromatique est un radical méta-di-yle
- X représente l'atome d'hydrogène ou un radical alkyle comportant de 1 à 3 atomes de carbone
- R représente un radical alkyle comportant de 1 à 3 atomes de carbone,
et que les dites compositions comprennent (pourcentages pondéraux)
- 10 à 50 % de biscarbamate de formule (I),
- 20 à 60 % d'huile végétale,
- 5 à 40 % d'agent(s) tensioactif(s), ayant des propriétés émulsifiantes et dispersantes,
- 20 à 60 % d'eau.

**2.** Compositions selon la revendication 1 caractérisées en ce que le biscarbamate est le phenmédipham.

**3.** Compositions selon l'une des revendications 1 ou 2 caractérisées en ce que l'huile végétale est de

5

l'huile de lin, de tournesol de colza ou de soja.

4. Compositions selon la revendication 3 caractérisées en ce que l'huile végétale est de l'huile de colza ou de soja.

5. Compositions selon l'une des revendications 1 à 4 caractérisées en ce qu'elles comprennent 0,01 à 5 % de biopolymère de type hétéropolysaccharidique.

6. Compositions selon la revendication 5 caractérisées en ce que le biopolymère est obtenu par fermentation d'une bactérie du genre xanthomonas sur des hydrates de carbone.

7. Composition selon l'une des revendications 1 à 6 caractérisées en ce que l'agent tensioactif ayant des propriétés émulsifiantes et dispersantes est constitué par le mélange d'au moins deux agents tensioactifs, l'un étant à propriétés dispersantes, l'autre étant à propriétés émulsifiantes.

8. Compositions selon la revendication 7 caractérisées en ce que l'agent tensioactif à propriétés émulsifiantes est choisi dans le groupe constitué par les alkylphénols ou polyalkylphénols ou polyarylalkylphénols polyéthoxylés, les alcools aliphatiques polyéthoxylés, les esters d'acides gras polyéthoxylés, les esters polyéthoxylés d'anhydrosorbitol, les polyoxypropylèneglycols, les polyoxypropylèneglycols polyéthoxylés, les copolymères d'oxyde d'alkylène et les esters de ces polyéthers.

9. Compositions selon la revendication 7 caractérisées en ce que l'agent tensioactif à propriétés dispersantes est choisi dans le groupe constitué par les sels d'acides polyacryliques, les sels d'acides lignosulfoniques, les sels d'acides phénol sulfoniques ou naphtalène sulfoniques, les acides gras polyéthoxylés et leur sels, les amines grasses polyéthoxylées et salifiées, les alkylbenzène sulfonates et alkylnaphtalène sulfonates, les sels d'esters d'acides sulfosucciniques, les dérivés de la taurine (notamment les alkyltaurates), les mono- ou diesters phosphoriques d'alcool ou de phénol polyéthoxylés, notamment de di ou tri phényléthyl phénol polyéthoxylés.

10. Procédé de traitement herbicide caractérisé en ce qu'on applique à un champ comportant une culture de betteraves une quantité efficace d'une bouillie obtenue par dilution à l'eau d'une composition selon l'une des revendications 1 à 9.

11. Procédé selon la revendicaton 10 caractérisé en ce que l'on applique une composition contenant 1 à 10 g/l de biscarbamate de formule (I), de préférence 1,1 à 6 g/l.

12. Procédé selon l'une des revendications 10 ou 11 caractérisé en ce qu'on applique 150 à 2000 g/ha de biscarbamate de formule (I), de préférence 250 à 1000 g/ha.

**Claims**

1. A liquid herbicidal composition based on biscarbamate, which are in the form of a dispersion of the active substance in an aqueous-organic emulsion and wherein the biscarbamate is of formula (I):

$$X - C_6H_4(m)- NH - CO - O - C_6H_4(m)- NH - CO - O - R$$

in which
(m) indicates that the aromatic radical is a meta-di-yl radical,
X represents a hydrogen atom or an alkyl radical containing from 1 to 3 carbon atoms,
R represents an alkyl radical containing from 1 to 3 carbon atoms,
and wherein the said compositions contain (percentages by weight):
10 to 50% of biscarbamate of formula (I),
20 to 60% of vegetable oil,
5 to 40% of surfactant(s), with emulsifying and dispersing properties and
20 to 60% of water.

2. The composition according to claim 1, wherein the biscarbamate is phenmedipham.

6

EP 0 299 961 B1

3. The composition according to one of claims 1 or 2, wherein the vegetable oil is linseed oil, sunflower oil, rape seed oil or soya bean oil.

4. The composition according to claim 3, wherein the vegetable oil is rape seed oil or soya bean oil.

5. The composition according to one of claims 1 to 4, which contains 0.01 to 5% of a biopolymer of the heteropolysaccharide type.

6. The composition according to claim 5, wherein the biopolymer is obtained by fermentation of carbohydrates by a bacterium of the genus Xanthomonas.

7. The composition according to one of claims 1 to 6, wherein the surfactant with the emulsifying and dispersing properties consists of a mixture of at least two surfactants, one with dispersing properties and the other with emulsifying properties.

8. The composition according to claim 7, wherein the surfactant with emulsifying properties is chosen from the group consisting of polycondensates of ethylene oxide with alkylphenols or polyalkylphenols or polyarylalkylphenols, polycondensates of ethylene oxide with aliphatic alcohols, polycondensates of ethylene oxide with fatty acid esters, polycondensates of ethylene oxide with anhydrosorbitol esters, polyoxypropylene glycols, polycondensates of ethylene oxide with polyoxypropylene glycols, and copolymers of alkylene oxide and esters of these polyethers.

9. The composition according to claim 7, wherein the surfactant with dispersing properties is chosen from the group consisting of polyacrylic acid salts, lignosulphonic acid salts, phenolsulphonic or naphthalenesulphonic acid salts, polycondensates of ethylene oxide with fatty acids and their salts, salified polycondensates of ethylene oxide with fatty amines, alkylbenzenesulphonates and alkylnaphthalenesulphonates, sulphosuccinic acid ester salts, taurine derivatives (especially alkyltaurates), polycondensates of ethylene oxide with phosphoric mono- or diesters of alcohol or of phenol, especially polycondensates of ethylene oxide with those of di- or triphenylethylphenol.

10. A weed control treatment process wherein an effective amount of a mixture obtained by diluting a composition according to one of claims 1 to 9 with water is applied to a field carrying a beet crop.

11. The process according to claim 10, wherein a composition containing 1 to 10 g/l of biscarbamate of formula (I), preferably 1.1 to 6 g/l, is applied.

12. The process according to one of claims 10 or 11, wherein 150 to 2,000 g/ha of biscarbamate of formula (I), preferably 250 to 1,000 g/ha, is applied.

**Patentansprüche**

1. Flüssige Herbizid-Zusammensetzungen auf der Grundlage von Biscarbamat, dadurch gekennzeichnet, daß sie in Form einer Dispersion des Aktivstoffes in einer organisch wäßrigen Emulsion vorliegen und daß das Biscarbamat die Formel (I)

$X - C_6 H_4 (m)- NH - CO - O - C_6 H_4 (m)- NH - CO - O - R$

hat, in der
- (m) kennzeichnet, daß der aromatische Rest ein meta-Diyl-Rest ist,
- X Wasserstoff oder einen 1 bis 3 Kohlenstoffatome enthaltenden Alkylrest und
- R einen 1 bis 3 Kohlenstoffatome enthaltenden Alkylrest bedeutet,
und daß diese Zusammensetzungen in Gewichtsprozent gehalten
- 10 bis 50 %     Biscarbamat der Formel (I),
- 20 bis 60 %     Pflanzenöl,
- 5 bis 40 %     oberflächenaktive(s) Mittel mit emulgierenden und dispergierenden Eigenschaften und
- 20 bis 60 %     Wasser umfassen.

**2.** Zusammensetzungen nach Anspruch 1, dadurch gekennzeichnet, daß das Biscarbamat Phenmedipham ist.

**3.** Zusammensetzungen nach Anspruch 1 oder 2, dadurch gekennzeichnet, daß das Pflanzenöl Lein-, Sonnenblumen-, Raps- oder Sojaöl ist.

**4.** Zusammensetzungen nach Anspruch 3, dadurch gekennzeichnet, daß das Pflanzenöl Raps- oder Sojaöl ist.

**5.** Zusammensetzungen nach einem der Ansprüche 1 bis 4, dadurch gekennzeichnet, daß sie 0,01 bis 5 % eines Biopolymeren vom Heteropolysaccharid-Typ enthalten.

**6.** Zusammensetzungen nach Anspruch 5, dadurch gekennzeichnet, daß das Biopolymere durch Fermentation eines Bakteriums der Art Xanthomonas auf Kohlenhydraten erhalten ist.

**7.** Zusammensetzungen nach einem der Ansprüche 1 bis 6, dadurch gekennzeichnet, daß das oberflächenaktive Mittel mit emulgierenden und dispergierenden Eigenschaften aus dem Gemisch wenigstens zweier oberflächenaktiver Mittel besteht, wobei das eine dispergierende und das andere emulgierende Eigenschaften aufweist.

**8.** Zusammensetzungen nach Anspruch 7, dadurch gekennzeichnet, daß das oberflächenaktive Mittel mit emulgierenden Eigenschaften aus der Gruppe ausgewählt ist, die aus polyethoxylierten Alkylphenolen oder Polyalkylphenolen oder Polyarylalkylphenolen, polyethoxylierten aliphatischen Alkoholen, polyethoxylierten Fettsäureestern, polyethoxylierten Anhydrosorbitestern, Polyoxypropylenglykolen, polyethoxylierten Polyoxypropylenglykolen und den Copolymeren aus Alkylenoxid und den Estern dieser Polyether besteht.

**9.** Zusammensetzungen nach Anspruch 7, dadurch gekennzeichnet, daß das oberflächenaktive Mittel mit dispergierenden Eigenschaften aus der Gruppe ausgewählt ist, die aus Polyacrylsäuresalzen, Ligninsulfonsäuresalzen, Phenol- oder Naphthalinsulfonsäuresalzen, polyethoxylierten Fettsäuren und ihren Salzen, versalzten und polyethoxylierten Fettaminen, Alkylbenzol- und Alkylnaphthalinsulfonaten, Sulfobernsteinsäureestersalzen, Derivaten des Taurins (insbesondere den Alkyltauraten) und polyethoxylierten Phenol- oder Alkoholphosphorsäuremonoestern oder Phenol- oder Alkoholphosphorsäurediestern, insbesondere dem polyethoxylierten Di- oder Triphenylethylphenol besteht.

**10.** Verfahren zur Herbizid-Behandlung, dadurch gekennzeichnet, daß man auf ein Feld einer Zuckerrübenkultur eine wirksame Menge einer Aufschlämmung aufbringt, die durch Verdünnung einor Zusammensetzung nach einem der Ansprüche 1 bis 9 mit Wasser erhalten ist.

**11.** Verfahren nach Anspruch 10, dadurch gekennzeichnet, daß man eine Zusammensetzung aufbringt, die 1 bis 10 g/l und vorzugsweise 1,1 bis 6 g/l Biscarbamat der Formel (I) enthält.

**12.** Verfahren nach Anspruch 10 oder 11, dadurch gekennzeichnet, daß man 150 bis 2000 g/ha und vorzugsweise 250 bis 1000 g/ha Biscarbamat der Formel (I) aufbringt.